# FASCICULE DE BREVET EUROPEEN

(11) **EP 3 288 899 B1**
(45) Date de publication et mention de la délivrance du brevet: **25.08.2021**
(21) Numéro de dépôt: 16724442.5
(22) Date de dépôt: 29.04.2016
(51) Int. Cl.: C02F 1/00

(54) **CARTOUCHE MOBILE, REMPLAÇABLE ET RÉGÉNÉRABLE DE TRAITEMENT D'EAU**
MOBILE, AUSWECHSELBARE UND REGENERIERBARE WASSER AUFBEREITUNGSKARTUSCHE
MOBILE , REPLACABLE AND REGENERATABLE WATER TREATMENT CARTOUCHE

(30) Priorité: 30.04.2015 FR 1553958
(43) Date de publication de la demande: 07.03.2018
(73) Titulaire: BFG Environmental Technologies, 67400 Illkirch-Graffenstaden (FR)
(72) Inventeur: PRADEAU, Paul, 67100 Strasbourg (FR); FRANÇOIS, Rémy, 67330 Obermodern (FR)
(74) Mandataire: Littolff, Denis
(86) Numéro de dépôt international: PCT/FR2016/051019
(87) Numéro de publication internationale: WO 2016/174371

(56) Documents cités:
- EP-A1- 2 433 907
- WO-A1-03/106003
- WO-A1-2007/132170
- US-A1- 2007 241 037

## Description

La présente invention concerne une cartouche mobile, remplaçable et régénérable, utilisée dans le domaine du traitement de l'eau et raccordable à cet effet dans un circuit véhiculant des eaux de différentes qualités dans lequel elle met en œuvre des opérations plus particulièrement liées à une étape dudit traitement. Des cartouches pour traitement de l'eau sont décrites dans US 2007/241037 A1, EP 2 433 907 A1, WO 2007/132170 A1 et WO 03/106003 A1.

Les cartouches peuvent avoir différentes fonctions, par exemple le traitement biologique d'eaux usées se présentant sous forme d'effluents générés par des toilettes, au moyen de boues activées épuratrices vivant dans la cartouche. Un tel traitement bactériologique est utilisé comme exemple préférentiel dans la suite du texte, mais il est loin d'être le seul, de nombreux autres exemples de traitement pouvant s'appliquer, comme la mise en œuvre d'une osmose inverse, une désinfection à l'ozone, une déminéralisation par résine échangeuse d'ions, une minéralisation etc... L'invention concerne également un dispositif de traitement d'eau basé sur la composition modulaire d'une ou plusieurs stations d'accueil d'une ou plusieurs cartouches, et permettant de traiter des capacités variables d'eau et/ou de mettre en œuvre différentes chaînes de traitements, par exemple le traitement biologique mentionné d'effluents générés par des toilettes, la purification à des degrés divers (allant de la qualité requise pour des eaux de baignade jusqu'à celle qui est exigée pour des eaux potables), la filtration, la valorisation des rejets, etc...

L'idée à la base de l'invention consiste en un découpage quantitatif et qualitatif, c'est-à-dire fonctionnel, de la chaîne de traitement de l'eau, mis en œuvre par des cartouches standardisées qui réalisent une fonction de traitement pour un volume ou un débit donné de fluide à traiter. Chaque cartouche doit être opérationnelle dès sa connexion à la station d'accueil et, secondairement, les opérations de remplacement doivent être très simples et immédiates à réaliser, la maintenance ou la régénération s'il y a lieu n'étant pas effectuée sur site. L'invention permet en d'autres termes un fonctionnement qualifié de « plug and play », vocable initialement utilisé dans le monde de l'informatique pour les périphériques connectés à une unité centrale, et ensuite largement passé dans d'autres domaines techniques et dans la langue française.

Il suffit en l'espèce de raccorder la cartouche à des moyens de connexions par exemple d'une station d'accueil pour qu'elle soit immédiatement prête à l'emploi. La connexion implique en pratique plusieurs types de raccordements, qui concernent principalement des fluides d'une part, et des énergies et informations d'autre part. Chaque cartouche de l'invention comporte à cet effet des connecteurs de conduits d'arrivée et de sortie d'au moins un fluide, ainsi que des ports de connexion des voies d'entrée/sortie de transport d'énergie et d'information.

Pour que la notion de « prêt à l'emploi dès connexion » prenne tout son sens, la cartouche de l'invention doit être mobile et aisément déplaçable, et par conséquent présenter un poids limité et une compacité raisonnable. Les déplacements des cartouches rendent d'ailleurs utile l'installation directement sur la cartouche de moyens de lui conférer une certaine mobilité.

Les cartouches sont enfin conçues pour remplir leur fonction, en relation avec une unité de contrôle-commande, pendant la période la plus longue possible, qui peut aller jusqu'à plusieurs mois. Des informations sur le traitement en cours sont échangées en temps réel avec des moyens électroniques de traitement à l'aide de voies de transport d'informations.

En fin de période d'autonomie, dans l'exemple du traitement biologique d'effluents de toilettes, la cartouche est enlevée et remplacée par une autre cartouche identique qui se situe au début de son cycle d'autonomie. La cartouche remplacée est envoyée sur un site de maintenance, par exemple afin de régénérer les membranes de filtration éventuellement utilisées, remplacer les composants en fin de vie et abaisser le niveau de concentration des boues épuratrices.

A ces effets, et en vue de rendre toutes les opérations de remplacement et de maintenance les plus rapides et les plus aisées possibles, la cartouche est conçue de telle sorte qu'elle comporte :
- une coque externe présentant une ouverture supérieure hermétiquement obturable par un couvercle, ainsi qu'au moins un accès rapide aux connecteurs et ports de connexion ;
- une coque interne présentant également une ouverture supérieure, délimitant un volume intérieur de la cartouche dans lequel sont disposés tous les équipements techniques de fonctionnement de la cartouche, solidarisés à au moins une structure insérable dans le volume intérieur par l'ouverture, ledit volume et la ou les structures comportant des moyens de guidage mutuels en vue de leur positionnement final à l'intérieur du volume intérieur ;
- des moyens de manutention de la cartouche solidarisés à la coque externe ;
- des moyens de rendre la cartouche mobile.

Cette séparation en coque externe, coque interne et structure(s) support(s) des composants facilite considérablement les manipulations sur la cartouche, notamment lorsqu'elle subit une maintenance sur un site spécialisé. Dans la mesure du possible, une seule structure support de tous les équipements est prévue, par exemple sous forme d'un châssis. En tout état de cause, la conception en prévoit un nombre minimal. Ainsi, lorsque la coque externe, dont les fonctions seront précisées par la suite, est ouverte, le démontage des éléments fonctionnels est quasi immédiat.

Dans l'hypothèse d'une cartouche visant au traitement d'eaux usées, c'est-à-dire d'effluents générés par des toilettes au moyen de boues activées épuratrices vivant dans la cartouche, celle-ci comporte plus précisément :
- un réservoir interne de traitement des eaux délimité par la coque interne; et
- un châssis insérable dans la coque interne qui lui sert de fourreau, ledit châssis comportant tous les équipements techniques de fonctionnement de la cartouche.

Dans ce cas, l'extraction du châssis permet d'avoir accès en une seule opération à la totalité des équipements et composants du système, tout en libérant l'accès au réservoir. L'idée est de fixer tous les composants en grappe sur le châssis, pour faciliter leur manipulation.

Plus précisément encore, dans cette application, le châssis comporte au moins une plaque de délimitation de compartiments dans le réservoir ; les équipements techniques de fonctionnement de la cartouche qui équipent le châssis pouvant ensuite comporter :
- des moyens de guidage/positionnement dans le réservoir ;
- des conduits de fluide ;
- des connecteurs à moyens de connexion de préférence étanches, rapides et sans outils des conduits d'arrivée et de sortie de fluide ;
- des ports de connexion dotés de connecteurs permettant un branchement/débranchement rapide et sans outils des voies d'entrée/sortie de transport d'énergie et d'information ;
- des instruments de mesure ;
- des capteurs.

Les moyens de guidage/positionnement permettent le guidage du châssis dans la coque interne qui lui sert de fourreau, en combinaison avec des moyens de guidage équipant la paroi interne de ladite coque, incluant leurs formes respectives, de telle sorte que l'ensemble de ces équipements soient correctement positionnés pour la fonction à accomplir lorsque le châssis est entièrement inséré. Chaque composant, fixé à l'avance sur ledit châssis, se positionne de manière prédéterminée pour remplir sa fonction, sans qu'il soit nécessaire d'ajuster encore son positionnement, lorsque le châssis est positionné.

En fait, et il s'agit d'un autre avantage intéressant de la conception cidessus, permettant un emboîtage successif de la coque interne dans la coque externe et du châssis dans la coque interne, lesdites coques peuvent être d'une seule pièce, sans autre orifice que l'ouverture supérieure. Il suffit alors de s'assurer de l'étanchéité au niveau des bordures de l'ouverture supérieure, sur une périphérie de surcroît orientée sensiblement perpendiculairement à la direction de fermeture, lors de la mise en place du couvercle de la coque externe. L'étanchéité est donc gérée au niveau du couvercle de la coque externe, la perpendicularité mentionnée facilitant en pratique la réalisation de l'étanchéification.

Selon l'invention, les coques sont de préférence moulées en matériau composite, ce qui permet d'une part leur fabrication en une pièce dotée d'une seule ouverture, et offre d'autre part une grande souplesse dans le choix du matériau en fonction du contexte d'utilisation des cartouches (vibrations, chocs, résistance aux liquides et/ou bactéries...). De préférence, un matériau isolant est interposé entre la coque externe et la coque interne afin de limiter les échanges thermiques avec le milieu extérieur.

On a évoqué auparavant la nécessité d'assurer une certaine mobilité à chaque cartouche, utile au moment des substitutions qui impliquent nécessairement des déplacements, même réduits, au moment de l'opération de remplacement. Ainsi, selon l'invention, chaque cartouche peut présenter des moyens de rendre la cartouche mobile comportant au moins un essieu à au moins un organe de roulement dépassant sous la coque externe.

En pratique, ces moyens de rendre la cartouche mobile peuvent consister en un support roulant sur lequel est fixée la cartouche de manière amovible. Un tel support peut être conçu pour des déplacements plus longs, s'il y a lieu.

Structurellement, le châssis peut comporter au moins une plaque d'allure verticale, la ou les plaque(s) définissant dans le réservoir des colonnes adjacentes, chaque plaque ménageant des passages supérieur et inférieur de circulation des boues.

Selon l'invention, les équipements du châssis peuvent par exemple comporter, dans l'hypothèse précitée d'un traitement bactériologique d'eaux usées :
- au moins un diffuseur d'air par colonne, et leurs conduits d'alimentations respectifs ;
- au moins un conduit d'arrivée des effluents ;
- au moins un conduit de vidange ;
- un filtre membranaire et son conduit de perméation ;
- au moins une plaquette de connectique comprenant des connecteurs des conduits d'arrivée et de sortie de fluide et/ou des ports de connexion des voies d'entrée/sortie de transport d'énergie et d'information ;
- des instruments de mesure ;
- des capteurs.

Ces composants permettent de maintenir un milieu approprié pour pérenniser les boues épuratrices, au moins pendant la période d'activité de la cartouche, en vue du traitement des effluents qui arrivent dans le réservoir. Ils assurent par ailleurs les échanges d'informations de manière à pouvoir contrôler le traitement en permanence. En principe, les cartouches ne subissent pas d'opérations de maintenance sur le site de leur exploitation, mais dans l'hypothèse où une vidange est effectuée, quelle qu'en soit la raison et en premier lieu pour faciliter l'extraction de la cartouche, le conduit de vidange est dimensionné de telle sorte que celle-ci puisse être effectuée en quelques minutes, au mieux en environ deux minutes.

Les capteurs et instruments de mesure sont prévus pour recueillir des informations en temps réel sur un certain nombre de paramètres nécessaires à la bonne marche du processus de traitement. Les capteurs fonctionnent en tout-ou-rien, alors que les instruments de mesure fournissent des informations évolutives. En particulier, au moins deux capteurs d'alerte de niveau doivent être prévus.

Par ailleurs, au moins les capteurs et instruments de mesure suivants peuvent équiper le châssis :
- au moins un instrument de mesure de température ;
- au moins un instrument de mesure du potentiel d'oxydo-réduction (Redox) et/ou un capteur d'oxygène dissous (DO) ;
- au moins un capteur de PH ;
- au moins un capteur de turbidité ; et
- au moins un capteur de conductivité.

Toutes les informations envoyées par ces capteurs et instruments de mesure sont traitées par au moins une unité de contrôle-commande qui peut, d'une part, en cas d'anomalie de fonctionnement, envoyer des signaux d'alerte à destination d'une structure de contrôle localisée à distance, voire stopper le traitement en cas d'absolue nécessité. Elle peut aussi réguler le fonctionnement des différents équipements dans le but de réaliser un traitement optimum et une autonomie maximale de la cartouche considérée.

Selon une possibilité, la cartouche est d'allure parallélépipédique, les connecteurs des conduits d'arrivée et de sortie de fluide et/ou des ports de connexion des voies d'entrée/sortie de transport d'énergie et d'information étant placés sur un premier côté de la cartouche situé à l'opposé d'un second côté comportant au moins une partie des moyens de manutention de la cartouche en vue de la déplacer, lesdits connecteurs et ports étant aptes à se connecter très rapidement à des connecteurs récepteurs d'une station d'accueil, les connexions s'effectuant automatiquement lorsque le premier côté de la cartouche arrive en butée dans la station d'accueil. L'aspect parallélépipédique n'est pas neutre, cette forme étant particulièrement bien adaptée à un guidage axial dans un logement de station d'accueil, guidage qui doit être suffisamment précis pour permettre l'établissement de connexions.

Dans la perspective de rendre les manipulations des cartouches les plus aisées, commodes et rapides possibles, il suffit par conséquent d'insérer la cartouche dans sa station d'accueil, les raccordements s'effectuant directement en bout de course lorsque l'insertion de la cartouche est terminée.

Lorsque c'est le cas, on peut actionner un levier de verrouillage de connexion placé dans ou au voisinage du côté comportant les moyens de manutention de la cartouche, l'activation dudit levier provoquant le verrouillage mécanique de la cartouche dans la station d'accueil en même temps que l'ouverture des connecteurs d'arrivée et de sortie de fluide et celle des ports de connexion des voies d'entrée/sortie de transport d'énergie et d'information. Un tel levier fonctionne un peu à la manière d'un loquet d'acquittement.

En tout état de cause, l'ensemble des caractéristiques techniques développées auparavant permet de manipuler très simplement les cartouches en vue de leur remplacement, sans qu'aucune fuite indésirable ne se produise au moment de la substitution, les opérations de maintenance étant elles-mêmes grandement facilitées par la conception même des cartouches.

L'invention concerne également un dispositif de traitement d'eau, par exemple pour le traitement d'eaux usées, qui comporte à titre principal :
- au moins une station d'accueil pouvant loger au moins une cartouche de traitement de l'eau, et présentant :
   - des connecteurs extérieurs à moyens de connexion étanches, rapides et sans outils de conduits d'arrivée et de sortie de fluides ;
   - des ports de connexion extérieurs à connecteurs permettant un branchement/débranchement rapide et sans outils de voies d'entrée/sortie de transport d'énergie et d'information ;
   - des compartiments intérieurs pouvant loger chacun une cartouche, dont le fond est équipé de connecteurs intérieurs de fluides, ainsi que de ports de connexion intérieurs de voies d'entrée/sortie de transport d'énergie et d'information ;
   - des moyens de guidage des cartouches étant prévus dans chaque compartiment pour qu'arrivées en butée, les cartouches soient connectées auxdits connecteurs et ports de connexion intérieurs ;
- au moins une cartouche dont un premier côté présente des connecteurs d'arrivée et de sortie de fluides et des ports de connexion de voies d'entrée/sortie de transport d'énergie et d'information, ledit premier côté étant situé à l'opposé d'un second côté comportant des moyens de manutention en vue de la déplacer ;
lesdits connecteurs et ports de chaque cartouche étant aptes à se connecter automatiquement à des connecteurs et ports intérieurs d'une station d'accueil, les connexions s'effectuant automatiquement lorsque la cartouche arrive en butée dans un compartiment.

Comme évoqué auparavant, les cartouches peuvent avoir différentes fonctions de traitement du liquide : il peut s'agir de multiples fonctions ayant rapport avec le traitement d'eau, dans le but très général de la purifier, chaque cartouche étant spécialisée dans un traitement spécifique. La station d'accueil du dispositif selon l'invention permet dès lors une mise en œuvre modulaire très souple, du fait du découpage fonctionnel choisi.

On peut ainsi associer des fonctions complémentaires pour augmenter le degré de purification des eaux usées, ou encore augmenter la capacité de traitement en associant au moins deux cartouches ayant la même fonction pour traiter un volume supérieur d'eau. Ainsi, la mise en œuvre d'une osmose inverse peut suivre un traitement bactériologique de départ, en vue de conférer à l'eau traitée une qualité d'eau supérieure, l'osmose pouvant le cas échéant être suivie d'une désinfection à l'ozone, voire d'un traitement par des résines échangeuses d'ions et d'une minéralisation pour la rendre potable. Chacune de ces opérations est en pratique réalisée par une cartouche spécifiquement dévolue à la fonction mentionnée.

D'autres opérations, conduisant par exemple à la revalorisation des contenus des cartouches, peuvent également être proposées par les cartouches, transformant par exemple des effluents de toilettes en engrais de fertilisation des cultures. Plus généralement encore, les cartouches peuvent en fait être conçues pour un traitement de l'eau qui soit physicochimique ou électrochimique, selon les types d'applications envisagées.

Par ailleurs, chaque station d'accueil peut comporter des moyens de traitement électronique des informations issues de la ou des cartouches qu'elle loge, et en particulier des moyens d'émission/réception et/ou de transfert d'au moins certaines de ces informations issues d'au moins une cartouche.

Ces moyens électroniques sont basés sur au moins un logiciel de traitement des paramètres issus des capteurs et instruments de mesure, et permettent à la station d'accueil de réagir à certaines situations définies par les paramètres des capteurs et instruments de mesure, et également d'envoyer le cas échéant des alertes, lorsque le traitement ne peut pas être automatisé mais dépend d'une prise de décision humaine. Le logiciel est lui-même potentiellement modulable selon les fonctions que la station d'accueil permet de mettre en œuvre.

L'invention va à présent être décrite plus en détail, dans l'exemple préférentiel du traitement biologique d'effluents générés par des toilettes, en référence aux figures annexées, pour lesquelles :
- la figure 1 représente une vue en perspective d'une cartouche selon la présente invention ;
- la figure 2 montre, en vue perspective éclatée, l'assemblage des coques interne et externe ;
- la figure 3 représente le châssis insérable dans lesdites coques assemblées ;
- la figure 4 est une vue en perspective de la cartouche vue du côté opposé ; et
- la figure 5 montre un agrandissement de l'angle supérieur de la cartouche muni des moyens de connexion.

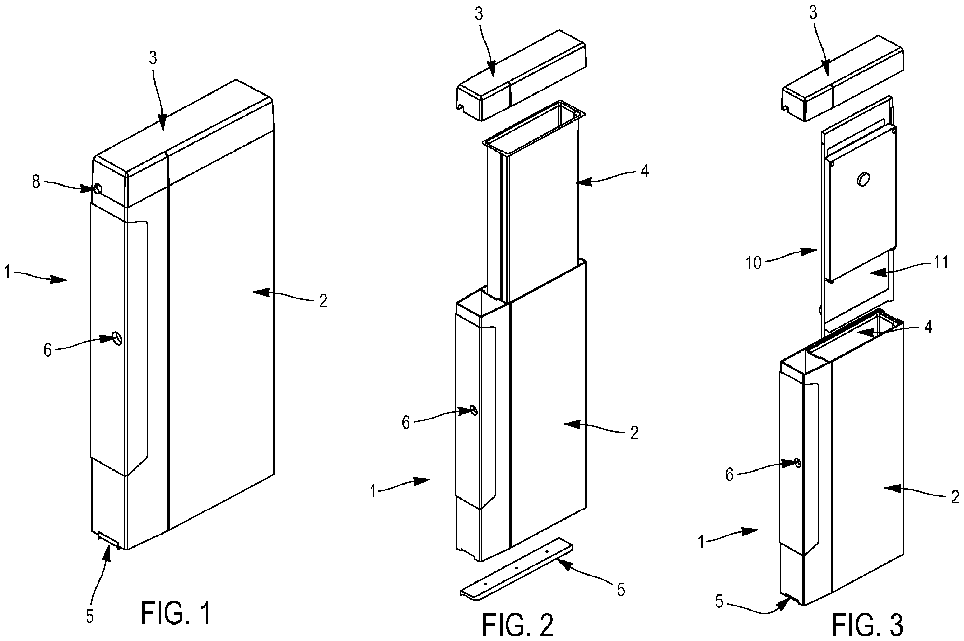

En référence à la figure 1, la cartouche (1) se compose, de l'extérieur, essentiellement d'une coque externe (2) et d'un couvercle supérieur (3). Plus précisément, comme représenté en figure 2, la coque externe (2) loge une coque interne (4) qui s'ajuste en fait dans une couche intermédiaire isolante. Un support roulant (5) fixé à la coque externe (2) de manière amovible permet de faciliter le déplacement de la cartouche (1). Celle-ci est de forme sensiblement parallélépipédique, forme qui permet d'optimiser son stockage au cours d'opérations de maintenance tout autant que son utilisation en combinaison avec une station d'accueil par exemple dans un train, les compartiments parallélépipédiques étant particulièrement avantageux pour guider/loger les cartouches.

Un connecteur (6) permet le raccordement à un conduit d'alimentation issu du circuit externe véhiculant le fluide à traiter. Le châssis (10) apparaît en figure 3. C'est sur lui que sont concentrés les équipements à la manière d'une grappe, de sorte que pour toute opération de maintenance, il suffit de l'extraire de la coque interne (4) pour pouvoir réaliser un traitement technique complet. Ce châssis (10) est à titre principal basé sur une plaque d'allure verticale (11) qui définit en l'occurrence, avec le volume intérieur de la coque (4) délimitant un réservoir, deux colonnes de traitement verticales parallèles.

Un certain nombre de capteurs et d'instruments de mesure sont disposés sur cette plaque (11), à propos desquels il n'est pas nécessaire à ce stade d'entrer dans les détails.

En référence à la figure 3, l'assemblage des différents éléments de la cartouche (1) de l'invention est bien illustré. Ainsi, la coque interne (4) est insérée dans la coque externe (2) jusqu'à arriver en butée par gravité au fond de cette dernière. Puis, le châssis (10) est lui-même glissé et guidé par gravité dans la coque interne (4).

En référence à la figure 1, le tuyau (8) qui apparaît sur le côté gauche de la cartouche (1) est dévolu à la vidange lors des opérations de maintenance, par exemple lorsqu'il s'agit d'une cartouche de traitement biologique d'eaux usées, pour laquelle le milieu bactérien est régénéré avant reconditionnement d'une nouvelle cartouche. Ce tuyau (8) est accessible de l'extérieur du couvercle (3).

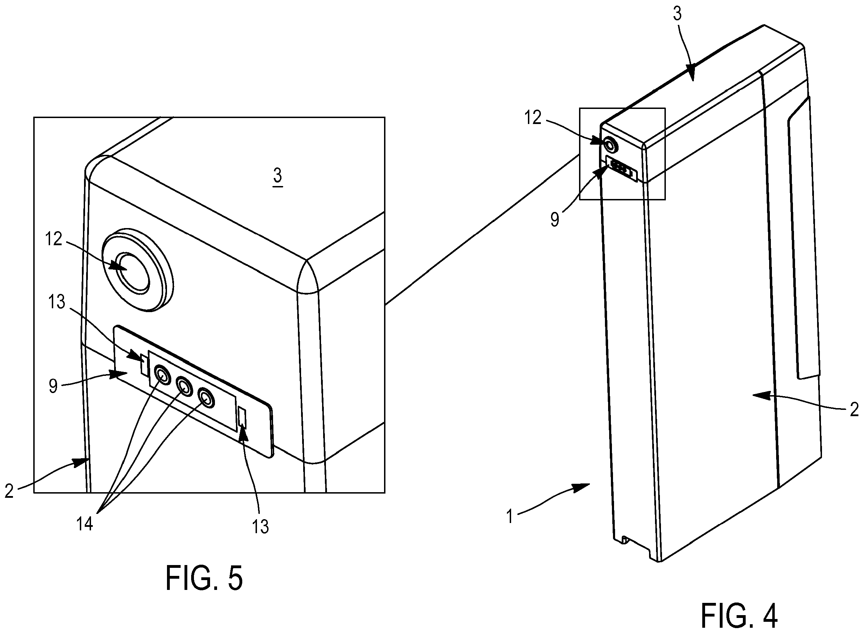

Une plaquette de connectique (9), par exemple solidaire du châssis (10), comporte à la fois des connecteurs (14) de fluide et des ports d'entrée/sortie de transport d'énergie et d'information, comme on le verra plus en détail dans la suite. Cette plaquette de connectique (9) est également accessible de l'extérieur de la cartouche (1), ainsi que cela figure notamment dans le détail agrandi apparaissant en figure 5. Elle peut notamment comporter un connecteur relié à un tube interne d'évacuation du fluide traité par la cartouche (1), et un connecteur d'arrivée d'air relié à une pompe externe y envoyant de l'air sous pression (non représentée, faisant en fait partie du circuit extérieur dans lequel la cartouche (1) est raccordée).

Une bouche (12) d'évacuation d'air est également prévue au voisinage de la plaquette (9) de connectique (voir en figures 4 et 5). Sur les côtés latéraux de ladite plaquette (9), des ports d'entrée/sortie (13) de transport d'énergie et d'information sont prévus pour la liaison par exemple à une alimentation électrique, et/ou à des moyens électroniques de traitement des signaux issus des capteurs et/ou des instruments de mesure, constituant l'information utile à partir de laquelle le bon fonctionnement de la cartouche (1) peut être évalué.

Lorsque la cartouche (1) de l'invention est utilisée par exemple pour le traitement biologique d'eaux usées générés par des toilettes d'un train, la cartouche (1) est insérée dans une station d'accueil localisée dans le train, qui comporte des moyens de traitement électronique de l'information. Le raccordement des différents connecteurs (14) et ports (13) s'effectue automatiquement lorsque la cartouche arrive en butée dans sa station d'accueil, guidée notamment par la complémentarité des formes de la cartouche et du compartiment de la station d'accueil. Le raccordement entre les ports d'entrée/sortie de transport d'énergie ou d'information (13) et une unité de contrôle est en particulier automatiquement effectué.

Le raccordement d'une telle cartouche (1) dans un circuit de traitement d'eaux usées suppose le raccordement du connecteur (6) avec un conduit d'arrivée des effluents en provenance d'une cuvette de toilettes. Les eaux traitées peuvent être renvoyées, directement ou via d'autres étapes de traitement, vers les toilettes afin de remplir le réservoir de la chasse d'eau. Ces liaisons fluidiques sont également automatiquement mises en œuvre lorsque la cartouche (1) est en butée au fond de son logement, et automatiquement obturées en cas de retrait de la cartouche (1).

La figure 2 montre de manière simplifiée le support roulant (5) de la cartouche (1), sous forme d'un profilé comportant par exemple une pluralité de rouleaux qui peuvent être situés aux extrémités dudit profilé.

L'exemple de mise en œuvre qui résulte des figures n'est bien entendu pas exhaustif de l'invention. Celle-ci englobe au contraire toutes les variantes de forme et de configuration qui résultent des revendications, la forme parallélépipédique n'étant en particulier pas contraignante, bien que pratique. Par ailleurs, la dévolution d'une cartouche (1) à une autre fonction que le traitement biologique d'effluents peut conduire à un châssis substantiellement différent, ou à la mise en place dans la coque interne de plusieurs châssis et/ou structures supportant des composants et équipements capables d'assurer la fonction de la cartouche, sans qu'il y ait nécessairement de réservoir, etc...

## Revendications

1. Cartouche (1) mobile, remplaçable et régénérable de traitement d'eau, ladite cartouche (1) étant raccordable dans un circuit de traitement d'eau et comportant des connecteurs (6, 14) de conduits d'arrivée et de sortie d'au moins un fluide et des ports (13) de connexion de voies d'entrée/sortie de transport d'énergie et d'information, comportant :
- une coque externe (2) présentant une ouverture supérieure hermétiquement obturable par un couvercle (3), ainsi qu'au moins un accès aux connecteurs (6, 14) et ports de connexion (13) ;
- une coque interne (4) emboîtée dans la coque externe (2) présentant également une ouverture supérieure, comportant un volume intérieur de la cartouche (1) constituant un réservoir de traitement des eaux, dans lequel sont disposés tous les équipements techniques de fonctionnement de la cartouche (1), **caractérisé en ce que** lesdits équipements techniques sont solidarisés à au moins un châssis (10) insérable par l'ouverture dans le volume intérieur de la coque interne (4) qui lui sert de fourreau, le châssis (10) comportant au moins une plaque (11) d'allure verticale de délimitation de compartiments dans le réservoir, la ou les plaque(s) (11) définissant dans le réservoir des colonnes adjacentes, chaque plaque (11) ménageant des passages supérieur et inférieur de circulation des boues, ledit volume et le châssis (10) comportant des moyens de guidage mutuels en vue de leur positionnement final à l'intérieur du volume intérieur ;
la cartouche (1) mobile comportant de plus :
- des moyens de manutention de la cartouche (1) solidarisés à la coque externe (2) ;
- des moyens (5) de rendre la cartouche (1) mobile du type comportant au moins un essieu à au moins un organe de roulement.

2. Cartouche (1) mobile, remplaçable et régénérable de traitement d'eau selon la revendication précédente, **caractérisée en ce que** les équipements techniques de fonctionnement de la cartouche (1) comportent :
- des moyens de guidage/positionnement dans le réservoir ;
- des conduits (8) de fluide ;
- des connecteurs (14) à moyens de connexion de préférence étanches, rapides et sans outils des conduits d'arrivée et de sortie de fluide ;
- des ports (13) de connexion dotés de connecteurs permettant un branchement/débranchement rapide et sans outils des voies d'entrée/sortie de transport d'énergie et d'information ;
- des instruments de mesure ;
- des capteurs.

3. Cartouche (1) mobile, remplaçable et régénérable de traitement d'eau selon l'une des revendications précédentes, **caractérisée en ce que** les coques externe (2) et interne (4) sont d'une seule pièce, sans autre orifice que l'ouverture supérieure.

4. Cartouche (1) mobile, remplaçable et régénérable de traitement d'eau selon l'une des revendications précédentes, **caractérisée en ce que** les coques (2, 4) sont moulées en matériau composite.

5. Cartouche (1) mobile, remplaçable et régénérable de traitement d'eau selon l'une des revendications précédentes, **caractérisée en ce qu'**un matériau isolant est interposé entre la coque externe (2) et la coque interne (4) afin de limiter les échanges thermiques avec le milieu extérieur.

6. Cartouche (1) mobile, remplaçable et régénérable de traitement d'eau selon l'une des revendications précédentes, **caractérisée en ce que** les moyens (5) de rendre la cartouche (1) mobile comportent au moins un essieu à au moins un organe de roulement dépassant sous la coque externe (2).

7. Cartouche (1) mobile, remplaçable et régénérable de traitement d'eau selon la revendication précédente, **caractérisée en ce que** les moyens de rendre la cartouche (1) mobile consistent en un support roulant (5) sur lequel est fixée la cartouche (1) de manière amovible.

8. Cartouche (1) mobile, remplaçable et régénérable de traitement d'eau selon la revendication précédente, **caractérisée en ce que** les équipements du châssis (10) comportent :
- au moins un diffuseur d'air par colonne, et leurs conduits d'alimentations respectifs ;
- au moins un conduit d'arrivée des effluents ;
- au moins un conduit de vidange ;
- un filtre membranaire et son conduit de perméation ;
- au moins une plaquette de connectique (9) comprenant des connecteurs (14) des conduits d'arrivée et de sortie de fluide et/ou des ports (13) de connexion des voies d'entrée/sortie de transport d'énergie et d'information ;
- des instruments de mesure ; et
- des capteurs.

9. Cartouche (1) mobile, remplaçable et régénérable de traitement d'eau selon la revendication précédente, **caractérisée en ce que** les capteurs du châssis (10) comportent au moins deux capteurs d'alerte de niveau.

10. Cartouche (1) mobile, remplaçable et régénérable de traitement d'eau selon l'une des revendications précédentes, **caractérisée en ce qu'**au moins les capteurs et instruments de mesures suivants équipent le châssis (10) :
- au moins un instrument de mesure de température ;
- au moins un instrument de mesure du potentiel d'oxydo-réduction (Redox) et/ou un capteur d'oxygène dissous (DO) ;
- au moins un capteur de PH ;
- au moins un capteur de conductivité ; et
- au moins un capteur de turbidité.

11. Cartouche (1) mobile, remplaçable et régénérable de traitement d'eau selon l'une des revendications précédentes, **caractérisée en ce que** la cartouche (1) est d'allure parallélépipédique, les connecteurs (14) des conduits d'arrivée et de sortie de fluide et/ou des ports (13) de connexion des voies d'entrée/sortie de transport d'énergie et d'information étant placés sur un premier côté de la cartouche situé à l'opposé d'un second côté comportant au moins une partie des moyens de manutention de la cartouche en vue de la déplacer, lesdits connecteurs (14) et ports (13) étant aptes à se connecter automatiquement à des connecteurs récepteurs d'une station d'accueil, les connexions s'effectuant automatiquement lorsque le premier côté de la cartouche (1) arrive en butée dans la station d'accueil.

12. Cartouche (1) mobile et remplaçable de traitement biologique d'eau selon la revendication précédente, **caractérisée en ce qu'**un levier de verrouillage des connexions est placé dans ou au voisinage du côté comportant les moyens de manutention de la cartouche (1), l'activation dudit levier provoquant le verrouillage mécanique de la cartouche dans la station d'accueil en même temps que l'ouverture des connecteurs (14) d'arrivée et de sortie de fluide et celle des ports (13) de connexion des voies d'entrée/sortie de transport d'énergie et d'information.

13. Dispositif de traitement biologique d'eau à cartouche(s) (1) selon les revendications précédentes, **caractérisé en ce qu'**il comporte :
- au moins une station d'accueil pouvant loger au moins une cartouche (1) de traitement de l'eau, et présentant :
• des connecteurs extérieurs à moyens de connexion étanches, rapides et sans outils de conduits d'arrivée et de sortie de fluides ;
• des ports de connexion extérieurs à connecteurs permettant un branchement/débranchement rapide et sans outils de voies d'entrée/sortie de transport d'énergie et d'information ;
• des compartiments intérieurs pouvant loger chacun une cartouche (1), dont le fond est équipé de connecteurs intérieurs de fluides, ainsi que de ports de connexion intérieurs de voies d'entrée/sortie de transport d'énergie et d'information ;
• des moyens de guidage des cartouches (1) étant prévus dans chaque compartiment pour qu'arrivées en butée, les cartouches (1) soient connectées auxdits connecteurs et ports de connexion intérieurs ;
- au moins une cartouche (1) selon une des revendications 1-12 dont un premier côté présente des connecteurs (14) d'arrivée et de sortie de fluides et des ports (13) de connexion de voies d'entrée/sortie de transport d'énergie et d'information, ledit premier côté étant situé à l'opposé d'un second côté comportant des moyens de manutention en vue de la déplacer ;
lesdits connecteurs (14) et ports (13) de chaque cartouche (1) étant aptes à se connecter automatiquement à des connecteurs et ports intérieurs d'une station d'accueil, les connexions s'effectuant automatiquement lorsque la cartouche (1) arrive en butée dans un compartiment.

14. Dispositif de traitement biologique d'eau selon la revendication précédente, **caractérisé en ce que** chaque station d'accueil comporte des moyens de traitement électronique des informations issues de la ou des cartouches (1), et en particulier des moyens d'émission/réception et/ou de transfert d'au moins certaines informations issues d'au moins une cartouche (1).

## Patentansprüche

1. Mobile, auswechselbare und regenerierbare Wasseraufbereitungskartusche (1), wobei die Kartusche (1) in einen Wasseraufbereitungskreislauf verbunden werden kann, und umfassend Verbinder (6, 14) von Ankunfts- und Ausgangsleitungen mindestens eines Fluids und Anschlüsse (13) zur Verbindung von Eingangs-/Ausgangswegen zum Transport von Energie und Information, umfassend:
- eine externe Schale (2), die eine obere Öffnung aufweist, die durch einen Deckel (3) hermetisch verschlossen werden kann, sowie mindestens einen Zugang zu den Verbindern (6, 14) und Verbindungsanschlüssen (13),
- eine innere Schale (4), die in die äußere Schale (2) eingefügt ist, die ebenfalls eine obere Öffnung aufweist, umfassend ein Innenvolumen der Kartusche (1), das einen Wasseraufbereitungsbehälter darstellt, in dem alle technischen Ausrüstungen zur Funktion der Kartusche (1) angeordnet sind, **dadurch gekennzeichnet, dass** die technischen Ausrüstungen fest mit mindestens einem Körper (10) untrennbar durch die Öffnung im Innenvolumen der inneren Schale (4) verbunden sind, die ihm als Hülle dient, wobei der Körper (10) mindestens eine Platte (11) mit vertikaler Ausrichtung zur Begrenzung von Abteilen im Behälter umfasst, wobei die Platte oder die Patten (11) im Behälter benachbarte Säulen definieren, wobei jede Platte (11) obere und untere Durchgänge zur Zirkulation von Schlamm bereitstellt, wobei das Volumen und der Körper (10) Mittel zur gegenseitigen Führung im Hinblick auf ihre endgültige Positionierung im Inneren des Innenvolumens umfassen;
wobei die mobile Kartusche (1) außerdem Folgendes umfasst:
- Mittel zur Handhabung der Kartusche (1), die fest mit der äußeren Schale (2) verbunden sind;
- Mittel (5) vom Typ, umfassend mindestens eine Achse mit mindesten einem Rollorgan, um die Kartusche (1) mobil zu machen.

2. Mobile, auswechselbare und regenerierbare Wasseraufbereitungskartusche (1) nach dem vorhergehenden Anspruch, **dadurch gekennzeichnet, dass** die technischen Ausrüstungen zum Funktionieren der Kartusche (1) Folgendes umfassen:
- Mittel zur Führung/Positionierung im Behälter;
- Fluidleitungen (8);
- Verbinder (14) mit vorzugsweise dichten, schnellen und werkzeuglosen Verbindungsmitteln der Ankunfts- und Ausgangsfluidleitungen;
- Verbindungsanschlüsse (13), die mit Verbindern ausgestattet sind, die ein schnelles und werkzeugloses Anschließen/Trennen der Eingangs-/Ausgangswege zum Transport von Energie und Information ermöglichen;
- Messinstrumente;
- Sensoren.

3. Mobile, auswechselbare und regenerierbare Wasseraufbereitungskartusche (1) nach einem der vorhergehenden Ansprüche, **dadurch gekennzeichnet, dass** die äußere (2) und innere Schale (4) aus einem einzigen Stück sind, ohne anderen Zugang als die obere Öffnung.

4. Mobile, auswechselbare und regenerierbare Wasseraufbereitungskartusche (1) nach einem der vorhergehenden Ansprüche, **dadurch gekennzeichnet, dass** die Schalen (2, 4) aus Verbundmaterial geformt sind.

5. Mobile, auswechselbare und regenerierbare Wasseraufbereitungskartusche (1) nach einem der vorhergehenden Ansprüche, **dadurch gekennzeichnet, dass** ein Isoliermaterial zwischen der inneren Schale (2) und der äußeren Schale (4) angebracht ist, um den thermischen Austausch mit dem äußeren Umfeld zu begrenzen.

6. Mobile, auswechselbare und regenerierbare Wasseraufbereitungskartusche (1) nach einem der vorhergehenden Ansprüche, **dadurch gekennzeichnet, dass** die Mittel (5), um die Kartusche (1) mobil zu machen, mindestens eine Achse mit mindestens einem Rollorgan umfassen, das unter die äußere Schale (2) vorsteht.

7. Mobile, auswechselbare und regenerierbare Wasseraufbereitungskartusche (1) nach dem vorhergehenden Anspruch, **dadurch gekennzeichnet, dass** die Mittel, um die Kartusche (1) mobil zu machen, aus einem Rollträger (5) bestehen, auf den die Kartusche (1) auf abnehmbare Weise befestigt ist.

8. Mobile, auswechselbare und regenerierbare Wasseraufbereitungskartusche (1) nach dem vorhergehenden Anspruch, **dadurch gekennzeichnet, dass** die Ausrüstungen des Körpers (10) Folgendes umfassen:
- mindestens einen Luftverteiler pro Säule und ihre entsprechenden Versorgungsleitungen;
- mindestens eine Ankunftsleitung der Abwässer;
- mindestens eine Entleerungsleitung;
- einen Membranfilter und seine Permeationsleitung;
- mindestens ein Anschlussplättchen (9), umfassend Verbinder (14) der Ankunfts- und Austrittsfluidleitungen und/oder Anschlüsse (13) zur Verbindung der Eingangs-/Ausgangswege zum Transport von Energie und Information;
- Messinstrumente; und
- Sensoren.

9. Mobile, auswechselbare und regenerierbare Wasseraufbereitungskartusche (1) nach dem vorhergehenden Anspruch, **dadurch gekennzeichnet, dass** die Sensoren des Körpers (10) mindestens zwei Niveaualarm-Sensoren umfassen.

10. Mobile, auswechselbare und regenerierbare Wasseraufbereitungskartusche (1) nach einem der vorhergehenden Ansprüche, **dadurch gekennzeichnet, dass** mindestens die folgenden Sensoren und Messinstrumente den Körper (10) ausstatten:
- mindestens ein Temperaturmessinstrument;
- mindestens ein Messinstrument der Oxidations-Reduktions (Redox)-Potentials und/oder einen Sensor des gelösten Sauerstoffs (DO);
- mindestens einen PH-Sensor;
- mindestens einen Leitfähigkeitssensor; und
- mindestens einen Trübungssensor.

11. Mobile, auswechselbare und regenerierbare Wasseraufbereitungskartusche (1) nach einem der vorhergehenden Ansprüche, **dadurch gekennzeichnet, dass** die Kartusche (1) parallelepipeder Ausrichtung ist, wobei die Verbinder (14) der Ankunfts- und Austrittsfluidleitungen und/oder der Verbindungsanschlüsse (13) der Eingangs-/Ausgangswege zum Transport von Energie und Information an einer ersten Seite der Kartusche platziert sind, die sich gegenüber einer zweiten Seite befindet, umfassend mindestens einen Teil der Mittel zur Handhabung der Kartusche im Hinblick auf ihre Verschiebung, wobei die Verbinder (14) und Anschlüsse (13) ausgelegt sind, um sich automatisch mit Empfängerverbinder einer Aufnahmestation zu verbinden, wobei sich die Verbindungen automatisch ergeben, wenn die erste Seite der Kartusche (1) in der Aufnahmestation am Anschlag ankommt.

12. Mobile, auswechselbare und regenerierbare biologische Wasseraufbereitungskartusche (1) nach dem vorhergehenden Anspruch, **dadurch gekennzeichnet, dass** ein Verriegelungshebel der Verbindungen an der oder in der Nähe der Seite platziert ist, die die Mittel zur Handhabung der Kartusche (1) umfasst, wobei die Aktivierung des Hebels die mechanische Verriegelung der Kartusche in der Aufnahmestation gleichzeitig mit der Öffnung der Ankunfts- und Eingangsfluidverbinder (14) und derjenigen der Anschlüsse (13) zur Verbindung der Eingangs-/Ausgangswege zum Transport von Energie und Information betätigt.

13. Verfahren zur biologischen Wasseraufbereitung mit (einer) Kartusche(n), (1) **dadurch gekennzeichnet, dass** es Folgendes umfasst:
- mindestens eine Aufnahmestation, die mindestens eine Wasseraufbereitungskartusche (1) aufnehmen kann und Folgendes darstellt:
• äußere Verbinder mit dichten, schnellen und werkzeuglosen Verbindungsmitteln der Ankunfts- und Ausgangsfluidleitungen
• äußere Verbindungsanschlüsse mit Verbindern, die ein schnelles und werkzeugloses Anschließen/Trennen der Eingangs-/Ausgangswege zum Transport von Energie und Information ermöglichen;
• innere Abteile, die jeweils eine Kartusche (1) aufnehmen können, deren Boden mit inneren Fluidverbindungen ausgestattet ist, ebenso wie mit inneren Verbindungsanschlüssen von Eingangs-/Ausgangswegen zum Transport von Energie und Information;
• wobei Führungsmittel der Kartuschen (1) in jedem Abteil vorgesehen sind, damit, angekommen am Anschlag, die Kartuschen (1) mit den Verbindern und inneren Verbindungsanschlüssen verbunden werden;
- mindesten eine Kartusche (1) nach einem der Ansprüche 1 - 12, wobei eine erste Seite Verbinder (14) der Eintritts- und Austrittsfluidverbindungen und Anschlüsse (13) zur Verbindung der Eingangs-/Ausgangswege zum Transport von Energie und Information aufweist, wobei sich die erste Seite gegenüber einer zweiten Seite befindet, ,umfassend Mittel zur Handhabung im Hinblick auf Ihre Verschiebung;
wobei die Verbinder (14) und Anschlüsse (13) jeder Kartusche (1) ausgelegt sind, um sich automatisch mit Verbindern und inneren Anschlüssen einer Aufnahmestation zu verbinden, wobei sich die Verbindungen automatisch ergeben, wenn die Kartusche (1) in einem Abteil am Anschlag ankommt.

14. Verfahren zur biologischen Wasseraufbereitung nach dem vorhergehenden Anspruch, **dadurch gekennzeichnet, dass** jede Aufnahmestation Mittel zur elektronischen Aufbereitung der Informationen umfasst, die aus der oder den Kartuschen (1) stammen, und insbesondere Mittel zur Emission/zum Empfang und/oder zur Übertragung mindestens bestimmter Informationen, die aus mindestens einer Kartusche (1) stammen.

## Claims

1. A mobile, replaceable and regenerable cartridge (1) for the treatment of water, said cartridge (1) being connectable in a water treatment circuit and including connectors (6, 14) for inlet and outlet pipes for at least one fluid and ports (13) for connecting inlet/outlet channels for data and power transmission, including:
- an outer shell (2) having an upper opening which can be hermetically sealed by a cover (3), as well as at least one access to the connectors (6, 14) and connection ports (13);
- an inner shell (4) fitted in the outer shell (2) also having an upper opening, including an inner volume of the cartridge (1) making up a water treatment reservoir, in which all the technical operating equipment of the cartridge (1) is arranged, **characterized in that** said technical equipment is secured to at least one chassis (10) able to be inserted through the opening into the inner volume of the inner shell (4) which serves as a sheath for it, the chassis (10) including at least one vertical plate (11) delimiting compartments in the reservoir, the plate(s) (11) defining adjacent columns in the reservoir, each plate (11) arranging upper and lower sludge circulation passages, said volume and said chassis (10) including mutual guide means for their final positioning inside the inner volume;
the mobile cartridge (1) also including:
- means for handling the cartridge (1) secured to the outer shell (2);
- means (5) for making the cartridge (1) mobile of the type including at least one axle with at least one rolling member.

2. The mobile, replaceable and regenerable cartridge (1) for the treatment of water according to the preceding claim, **characterized in that** the technical operating equipment of the cartridge (1) includes:
- guide/positioning means in the reservoir;
- fluid pipes (8);
- connectors (14) to connection means, which are preferably impermeable, quick and tool-free, for connecting to fluid inlet and outlet pipes;
- connection ports (13) provided with connectors allowing quick and tool-free connection/disconnection of the inlet/outlet channels for power and data transmission;
- measuring instruments;
- sensors.

3. The mobile, replaceable and regenerable cartridge (1) for the treatment of water according to one of the preceding claims, **characterized in that** the outer (2) and inner (4) shells are in one piece, with no orifice other than the upper opening.

4. The mobile, replaceable and regenerable cartridge (1) for the treatment of water according to one of the preceding claims, **characterized in that** the shells (2, 4) are molded from a composite material.

5. The mobile, replaceable and regenerable cartridge for the treatment of water according to one of the preceding claims, **characterized in that** an insulating material is interposed between the outer shell (2) and the inner shell (4) so as to limit heat exchanges with the outside environment.

6. The mobile, replaceable and regenerable cartridge (1) for the treatment of water according to one of the preceding claims, **characterized in that** the means (5) for making the cartridge (1) mobile include at least one axle with at least one rolling member protruding below the outer shell (2).

7. The mobile, replaceable and regenerable cartridge (1) for the treatment of water according to the preceding claim, **characterized in that** the means for making the cartridge (1) mobile consist of a rolling support (5) on which the cartridge (1) is fixed removably.

8. The mobile, replaceable and regenerable cartridge (1) for the treatment of water according to the preceding claim, **characterized in that** the equipment of the chassis (10) includes:
- at least one air diffuser per column, and their respective supply pipes;
- at least one effluent inlet pipe;
- at least one drain pipe;
- a membrane filter and its permeation pipe;
- at least one connector plate (9) comprising connectors (14) for the fluid inlet and outlet pipes and/or ports (13) for connecting inlet/outlet channels for data and power transmission;
- measuring instruments; and
- sensors.

9. The mobile, replaceable and regenerable cartridge (1) for the treatment of water according to the preceding claim, **characterized in that** the sensors of the chassis (10) include at least two level alert sensors.

10. The mobile, replaceable and regenerable cartridge (1) for the treatment of water according to one of the preceding claims, **characterized in that** at least the following sensors and measuring instruments equip the chassis (10):
- at least one temperature measuring instrument;
- at least one instrument for measuring the oxidation-reduction (redox) potential and/or a dissolved oxygen (DO) sensor;
- at least one pH sensor;
- at least one conductivity sensor; and
- at least one turbidity sensor.

11. The mobile, replaceable and regenerable cartridge (1) for the treatment of water according to one of the preceding claims, **characterized in that** the cartridge (1) is parallelepipedal, the connectors (14) of the fluid inlet and outlet pipes and/or the ports (13) for connecting inlet/outlet channels for data and power transmission being placed on a first side of the cartridge located opposite a second side including at least part of the means for handling the cartridge in order to move it, said connectors (14) and ports (13) being able to connect automatically to receiving connectors of a host station, the connections being done automatically when the first side of the cartridge (1) abuts in the host station.

12. The mobile and replaceable cartridge (1) for the biological treatment of water according to the preceding claim, **characterized in that** a lever for locking the connections is placed in or near the side including the handling means of the cartridge (1), the activation of the lever causing the mechanical locking of the cartridge in the host station at the same time as the opening of the fluid inlet and outlet connectors (14) and that of the ports (13) for connecting inlet/outlet channels for data and power transmission.

13. The device for the biological treatment of water with cartridge(s) (1) according to the preceding claims, **characterized in that** it includes:
- at least one host station able to house at least one water treatment cartridge (1), and having:
• outside connectors to impermeable, quick and tool-free connection means for connecting to fluid inlet and outlet pipes;
• ports for outside connections to connectors allowing a quick and tool-free connection/disconnection to inlet/outlet channels for power and data transmission;
• interior compartments each able to house a cartridge (1), the bottom of which is equipped with interior fluid connectors, as well as ports for interior connections of inlet/outlet channels for data and power transmission;
• means for guiding cartridges (1) being provided in each compartment so that when they have arrived in abutment, the cartridges (1) are connected to said interior connectors and connection ports;
- at least one cartridge (1) according to one of claims 1-12, a first side of which has fluid inlet and outlet connectors (14) and ports (13) for connecting inlet/outlet channels for data and power transmission, said first side being located opposite a second side including handling means in order to move it;
said connectors (14) and ports (13) of each cartridge (1) being able to connect automatically to interior connectors and ports of a host station, the connections being done automatically when the cartridge (1) comes into abutment in a compartment.

14. The device for the biological treatment of water according to the preceding claim, **characterized in that** or each host station includes means for the electronic processing of information from the cartridge(s) (1), and in particular transmission/reception means and/or means for the transmission of at least certain information from at least one cartridge (1).
